# EUROPÄISCHE PATENTSCHRIFT

(11) **EP 0 275 968 B1**
(45) Veröffentlichungstag und Bekanntmachung des Hinweises auf die Patenterteilung: **31.08.1994**
(21) Anmeldenummer: 88100679.5
(22) Anmeldetag: 19.01.1988
(51) Int. Cl.: G05D 7/06, G05D 16/20

(54) **Steuervorrichtung für ein hydrostatisches Getriebe für wenigstens zwei Verbraucher**
Control device for a hydrostatic transmission for at least two users
Dispositif de commande pour une transmission hydrostatique pour au moins deux utilisateurs

(30) Priorität: 23.01.1987 DE 3702000
(43) Veröffentlichungstag der Anmeldung: 27.07.1988
(73) Patentinhaber: BRUENINGHAUS HYDROMATIK GMBH, 89275 Elchingen (DE)
(72) Erfinder: Walzer, Winfried, Dr., D-7915 Elchingen 2 (DE)
(74) Vertreter: Körber, Wolfhart, Dr.rer.nat.

(56) Entgegenhaltungen:
- EP-A- 0 010 860
- EP-A- 0 188 024
- WO-A-86/04431

## Beschreibung

Die Erfindung bezieht sich auf eine Steuervorrichtung nach dem Oberbegriff des Anspruches 1.

Aus dem im BMT 3, März 1986, S. 108 erschienenen Aufsatz "Warum Load-Sending-Steuerungen" von G. Lettmann ist eine Steuervorrichtung dieser Art, eine sogenannte "Load-Sending"-Steuerung, bekannt, bei der der zu jedem Verbraucher gelangende Fördermengenteilstrom mittels der Druckwaagen in Abhängigkeit vom Öffnungsquerschnitt des jeweils zugehörigen Steuerventils bemessen wird. Dabei erfolgt die Fördermengeneinstellung der Pumpe in Abhängigkeit von Verbraucherlasten bis zu 400 bar bei einer konstanten Druckdifferenz Δp₂ von etwa 8 bis 20 bar an den Steuerventilen, was zu Schwingungsproblemen und damit auch zu Ungenauigkeiten in der Steuerung führt. Die Verbraucherlasten werden der Verstellvorrichtung der Pumpe mittels Lastdruck-Rückführungsleitungen übermittelt.

Der Erfindung liegt die Aufgabe zugrunde, eine Steuervorrichtung der eingangs bezeichneten Art bei Gewährleistung einer präzisen Steuerung zu vereinfachen.

Diese Aufgabe wird durch die kennzeichnenden Merkmale des Anspruches 1 gelöst.

Bei der erfindungsgemäßen Ausgestaltung wird die Fördermengeneinstellung elektronisch geregelt, und zwar in Abhängigkeit der automatisch geregelten Druckwaagen. Es kommen somit nicht nur hydraulische Rückmeldungsleitungen in Fortfall, sondern es wird auch eine präzise bzw. stabile und schwingungsunempfindliche Regelung erreicht, die sich insbesondere für Einsatzfälle eignet, bei denen Schwingungen unvermeidlich auftreten, wie es insbesondere bei Fahrzeugen und Baumaschinen, wie Kränen, Radladern, Erdschiebern und Baggern, der Fall ist. Eine beim Regelvorgang auftretende geringe Über- oder Unterversorgung der Verbraucher wird bewußt in Kauf genommen.

Die Erfindung geht von der Tatsache aus, daß die Druckwaage des Verbrauchers mit der höchsten Last einen definierten Zustand, nämlich ganz geöffnet, einnimmt, solange die Pumpe zu wenig Druck erzeugt. Liefert die Pumpe einen höheren Druck als vom Verbraucher mit der größten Last gefordert, so wird sich die Eingangsdruckwaage vom ganz geöffneten Zustand lösen und eine Zwischenstellung einnehmen. In einem Betriebszustand mit gleichbleibender Verbraucherforderung wird bei der erfindungsgemäßen Steuervorrichtung die Pumpe stets so geregelt, daß die Fördermenge mit zunehmender Öffnung vergrößert und mit sich verringernder Öffnung verringert wird.

Beim Vorhandensein mehrerer Verbraucher wird die Pumpe so lange ausgeschwenkt bzw. ausgeschwenkt gehalten. bis sämtliche Druckwaagen von ihrer ganz geöffneten Endlage in eine Zwischenstellung übergehen. Daraufhin wird die Pumpe so lange zurückgeschwenkt oder zurückgeschwenkt gehalten, bis eine der Druckwaagen wieder ihre ganz geöffnete Endlage erreicht. Dies ist für die erfindungsgemäße Regelung das Zeichen, daß der Druck nicht ausreicht und die Pumpe wieder auf mehr Fördermengen zu verstellen ist, usw..

Vorteilhafte Ergebnisse wurden beispielsweise mit der Ausgestaltung nach Anspruch 2 erzielt, bei der das Meßglied durch einen Endschalter gebildet ist. Bei dieser Ausgestaltung wird die Pumpe stets so geregelt, daß bei Endanschlag und Kontakt des Endschalters (Druckwaage völlig geöffnet) mehr Fördermenge und bei Zwischenstellungen der Druckwaage (teilweise geöffnet) weniger Fördermenge eingeregelt wird.

Eine wesentliche Verbesserung im Regelverhalten wird bei Ersatz des Zweipunkt-Regelprinzips nach Anspruch 2 durch ein Regelprinzip erreicht, welches ständig die Regelabweichung der Druckwaage des Verbrauchers mit dem höchsten Lastdruck mittels eines Wegaufnehmers nach Anspruch 3 registriert und die Pumpe über einen Regler proportional, integral und/oder differential nachführt. Hierzu eignet sich ein üblicher PID-Regler.

Nachfolgend wird die Erfindung anhand eines in einer vereinfachten Zeichnung dargestellten bevorzugten Ausführungsbeispiels näher erläutert.

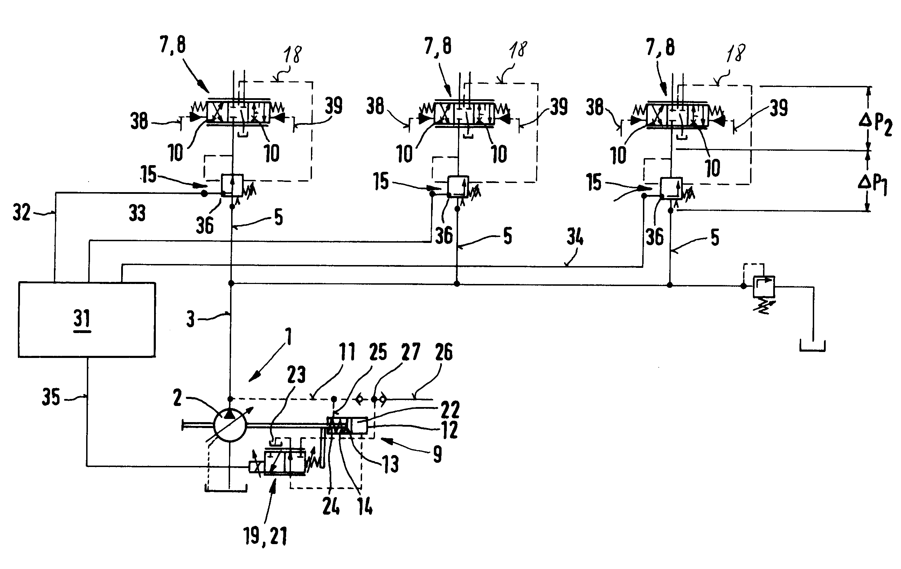

Die Zeichnung zeigt eine erfindungsgemäß ausgestaltete Steuervorrichtung für ein hydrostatisches Getriebe für drei Verbraucher.

Von dem in der Zeichnung allgemein mit 1 bezeichneten hydrostatischen Getriebe sind lediglich die Pumpe 2 und ein Teil des offenen Kreislaufs dargestellt, nämlich die Hauptleitung 3, wobei die Verbraucher aus Vereinfachungsgründen nicht dargestellt sind. Jedem Verbraucher ist ein Hauptleitungsabschnitt 5 zugeordnet, in den jeweils ein Steuerventil 7 in Form eines Proportional--Wegeventils 8 eingesetzt ist. Es handelt sich jeweils um ein 5/3-Wegeventil mit einer mittleren Sperrstellung und seitlichen Wechselstellungen für Funktionsumkehr des Hydromotors (Verbrauchers), falls letzteres erforderlich ist. In den Hauptleitungsabschnitten 5 befinden sich Drosseln 10, die beim vorliegenden Ausführungsbeispiel in die Steuerventile 7 integriert sind.

Bei der Pumpe 2 handelt es sich um eine solche mit verstellbarer Fördermenge, die durch eine elektrisch-hydraulische Verstellvorrichtung 9 einstellbar ist, die durch eine hydraulische Leitung 11 mit der Hauptleitung 3 der Pumpe 2 verbunden und somit durch den Förderdruck der Pumpe 2 verstellbar ist. Die Verstellvorrichtung 9 umfaßt einen hydraulischen Zylinder 12, dessen Stellkolben 13 hydraulisch gegen eine Feder 14 verstellbar ist und am Fördermengeneinstellglied der Pumpe 2 angreift.

In jedem zum zugehörigen Steuerventil 7 führenden Hauptleitungsabschnitt 5 ist ein Stromventil in Form einer Druckwaage 15 angeordnet. Die Druckwaage 15 ist vom im jeweiligen Hauptleitungsabschnitt 5 herrschenden Förderdruck und aufgrund einer Verbindungsleitung 18 mit dem hinter dem Steuerventil 7 herrschenden Lastdruck beaufschlagt. An den Druckwaagen können Druckabfälle ΔP₁ bis zu mehreren hundert bar auftreten, während an den Meß-Drosseln 10 aufgrund der Volumenstromregelung stets ein ΔP₂ von etwa 8 bis 9 bar aufrecht erhalten bleibt. Ausnahme: Bei Verbrauchsforderung Förderstrom = 0 wird die Druckwaage eine Mikrobewegung um die voll geschlossene Stellung ausführen.

Der Verstellvorrichtung 9 ist ein allgemein mit 19 bezeichnetes Stellglied zugeordnet, das in Abhängigkeit eines Ansteuerstromes, welcher sich aus den Druckwaagenpositionen ergibt, auf die Fördermengenbemessung einwirkt. Das Stellglied 19 wird durch ein elektromagnetisches Proportionalventil 21 gebildet, das in der die Hauptleitung 3 mit einer Arbeitskammer 22 des Zylinders 12 verbindenden Leitung 11 angeordnet ist und den Durchgang zu dieser Arbeitskammer 22 bzw. einem Rücklauf 23 steuert. Bei dem vorliegenden Ausführungsbeispiel ist auch die andere Arbeitskammer 24 des Zylinders 12 durch einen Leitungsabschnitt 25 mit der Förderdruck beaufschlagbar. Die Feder 14 ist in der Arbeitskammer 24 angeordnet, die durch die Kolbenringkammer des Zylinders 12 gebildet ist.

An die Leitung 11 kann sich eine einen Hilfsdruck führende Steuerleitung 26 anschließen, die beiderseits ihrer Verbindungsstelle 27 durch Rückschlagventile gegen die Hauptleitung 3 gesichert ist.

Der Steuervorrichtung ist eine elektronische Regeleinrichtung 31 zugeordnet, die durch elektrische Leitungen 32 bis 34 mit den Druckwaagen 15 verbunden ist. Ferner ist die elektronische Regeleinrichtung 31 durch eine elektrische Leitung 35 mit dem Stellglied 19 bzw. Proportionalventil 21 verbunden.

Jeder Druckwaage 15 ist ein Endschalter 36 zugeordnet, der bei völlig geöffneter Druckwaage 15 betätigt wird und somit eine Anzeige für die völlig geöffnete Position der Druckwaage 15 zu liefern vermag.

Anstelle des Endschalters 36 kann auch ein Wegaufnehmer in Form eines Meßelementes zwecks Aufnahme beliebiger Öffnungs-Positionen und auch Zwischenstellungen der Druckwaage 15 vorgesehen sein.

Mit 38 und 39 sind zu den Steuerventilen 7 führende hydraulische oder elektrische Leitungen bezeichnet, mittels denen die Steuerventile 7 willkürlich verstellbar bzw. einstellbar sind zwecks Vorgabe eines gewählten Volumenstromes für den jeweiligen bzw. für die Verbraucher.

Im folgenden wird die Funktion der Steuervorrichtung näher beschrieben.

Es wird davon ausgegangen, daß die Druckwaage 15 des Verbrauchers mit der höchsten Last einen definierten Zustand (ganz geöffnet) einnimmt, solange die Pumpe 2 zu wenig Druck erzeugt. Liefert die Pumpe 2 einen höheren Druck als vom Verbraucher mit der größten Last gefordert, so wird sich die Druckwaage 15 vom ganz geöffneten Zustand lösen und eine Zwischenstellung einnehmen. Diese beiden Überlegungen zeigen, daß ein Zusammenhang zwischen der Stellung der Druckwaage 15 des Verbrauchers mit der höchsten Last und dem an der Pumpe 2 erforderlichen Stellsignal in der Form existiert, daß die Pumpe 2 so lange mehr Druck und mehr Fördermenge (mehr Schwenkwinkel) bringen muß, bis die Druckwaage 15 anzusprechen beginnt und sich von ihrer ganz geöffneten Stellung löst.

Sobald sich Druckwaage 15 des Verbrauchers mit der höchsten Last aus der bzw. vom ganz geöffneten Endlage bzw. Endanschlag löst, bedeutet dies, daß der an der Pumpe 2 erzeugte Druck und der Volumenstrom der Verbraucherforderung genügt. Die Pumpe 2 braucht nicht weiter auszuschwenken, sondern kann wieder ein wenig zurückgeschwenkt werden, bis die Druckwaage 15 wieder ihren geöffneten Zustand erreicht.

In einem stationären Betriebszustand mit gleichbleibender Verbraucherforderung würde damit die Pumpe 2 stets so geregelt, daß bei einer Position der Druckwaage in ihrer Endlage, nämlich dem Endschalter 36 (Druckwaage ganz geöffnet) mehr Fördermenge, und bei Zwischenstellungen der Druckwaage 15 weniger Fördermenge eingeregelt wird.

Beim Vorhandensein von mehreren Verbrauchern müßte die Pumpe 2 so lange ausgeschwenkt werden, bis sämtliche Druckwaagen 15 von ihrer ganz geöffneten Endlage in ein Zwischenstellung übergehen. Daraufhin kann die Pumpe 2 so lange zurückgeschwenkt werden, bis wieder eine der Druckwaagen 15 ihre ganz geöffnete Endlage erreicht. Dies ist für die Regelung das Zeichen, daß der Druck nicht ausreicht und die Pumpe 2 wieder auf mehr Fördermenge eingestellt werden muß, usw..

Die beschriebene eindeutige Beziehung zwischen der erforderlichen Pumpeneinstellung und dem Verhalten der Druckwaagen 15 kann mit Hilfe der elektronischen Logikschaltung 31 (analog oder digital) den Endschaltern 36 (am besten berührungslos induktiv oder optisch) und dem Stellglied 19 sehr einfach zur Load-Sensing-Regelung ausgenützt werden.

Eine mögliche Variante der Regelung kann nun so aussehen, daß eine elektronische Schaltung (Logikschaltung 31) die Pumpe über einen PID-Regler der Druckwaagenstellung desjenigen Verbrauchers nachführt, welcher zum momentanen Zeitpunkt den höchsten Lastdruck aufweist.

Im stationären Zustand muß die Pumpe nur eine differentiell kleine Verstellbewegung machen, wodurch das ΔP₁ weitgehendst umgangen wird. Eine solche elektronische Regelung ist sehr einfach auszuführen und kann über die dann mögliche einfache Einstellung des Zeitverhaltens der Regelung schwingungstechnisch gut beherrscht werden (elektronische Dämpfung, falls überhaupt nötig).

Vorteile der elektronischen Regelung:
Einfacher Aufbau (hydraulisch und elektrisch).
Keine LS-Rückmeldung (Lastdruck-Rückmeldung) erforderlich (keine LS-Leitung), da am Verbraucher mit der höchsten Volumenstrom-Anforderung die Druckwaage ganz öffnet und dies über das zugehörige Meßelement (Endschalter oder Wegaufnehmer) erfaßt wird.
Einfache logische Verknüpfung zwischen Istwertaufnehmern (Meßelement) und Stellgerät (einfache elektrisch-proportionale Verstellung).
Fortfall der Druckdifferenz ΔP₁ für den Verbraucher mit der größten Volumenstromforderung.
Keine Probleme mit Schwingungen, da keine unmittelbare hydraulische Lastdruckrückmeldung, sondern mit Meßelementen erfaßte Druckwaagenpositionen und elektrische Signalerfassung und -auswertung erfolgt.
Elektrische Dämpfung leicht möglich (falls überhaupt erforderlich).
Kein Leistungsverlust am Verbraucher mit dem höchsten Arbeitsdruck.
Bei fehlender Verbraucherforderung kann der Stand-By-Druck bis in den Bereich von 0 bar abgesenkt werden.
Geringe Erwärmung im Standby-Betrieb.
Geregelter Betrieb der Pumpe; damit automatische Anpassung an im Laufe der Lebensdauer veränderte Sollwert-Istwert Konstellationen in den Ventilen und in der Pumpe.
Der Verbraucher mit dem höchsten Lastdruck wird mit dem geforderten Volumenstrom versorgt.
Durch einfachen billigen Aufbau auch für Geräte, insbesondere Baugeräte (Bagger etc.) der unteren Leistungsklassen interessant.
Keine spezielle Load-Sensing-Pumpe erforderlich, sondern nur eineEP-Pumpe (elektronisch-proportionale Verstellung).
Gleichbleibendes Regelverhalten, da Kennlinienveränderungen an den Ventilen und an der Pumpe erkannt und ausgeregelt werden.

## Patentansprüche

1. Steuervorrichtung für ein hydrostatisches Getriebe, das eine mittels einer Verstellvorrichtung (9) in ihrem Fördervolumen verstellbare Pumpe (2) und wenigstens zwei an diese angeschlossene Verbraucher umfaßt, mit je einem jedem Verbraucher zugeordneten Steuerventil (7) zur Steuerung des dem jeweiligen Verbraucher zuzuführenden Förderstroms und mit je einer in Strömungsrichtung vor jedem Steuerventil angeordneten Druckwaage (15), die durch den in Strömungsrichtung nach dem Steuerventil abgenommenen Verbraucherdruck gegen den in Strömungsrichtung vor dem Steuerventil abgenommenen Pumpendruck in Richtung einer Durchflußstellung ansteuerbar ist, **gekennzeichnet durch** je ein jeder Druckwaage (15) zugeordnetes, unterschiedliche Durchflußstellungen derselben erfassendes Meßglied (36), das über eine Signalleitung (32,33,34) an eine elektronische Regeleinrichtung (31) angeschlossen ist, die ein die Verstellvorrichtung (9) steuerndes Stellglied (19) über eine Signalleitung (35) so lange in Richtung Vergrößerung des Fördervolumens des Pumpe (2) ansteuert, bis jede Druckwaage (15), die eine Durchflußstellung maximaler Öffnungsweite einnimmt, auf eine Durchflußstellung kleinerer Öffnungsweite eingestellt ist, und die das Stellglied (19) in Richtung einer Verringerung des Fördervolumens der Pumpe (2) so lange ansteuert, bis eine der Druckwaagen (15), die die Durchflußstellung kleinerer Öffnungsweite einnimmt, auf die Durchflußstellung maximaler Öffnungsweite eingestellt ist.

2. Steuervorrichtung nach Anspruch 1,
**dadurch gekennzeichnet,**
daß das Meßglied (36) durch einen Endschalter gebildet ist.

3. Steuervorrichtung nach Anspruch 1,
**dadurch gekennzeichnet,**
daß das Meßglied (36) durch einen Wegaufnehmer gebildet ist.

## Claims

1. A control device for a hydrostatic drive, comprising a pump (2) the displacement volume of which is variable by means of an adjusting device (9), and at least two actuators connected to the pump, with respective control valves (7) associated with the actuators, for controlling the delivery flows to be supplied to the respective actuators, and with respective pressure compensators (15) arranged, in the direction of flow, before the respective control valves, which compensators are controllable towards a through-flow setting by the actuator pressure taken, in the direction of flow, after the control valve against the pump pressure taken, in the direction of flow, before the control valve, characterised by respective measuring elements (36) associated with the respective pressure compensators (15) and detecting different through-flow settings of the compensators, each measuring element being connected to an electronic control device (31) via a signal line (32, 33, 34), which device controls the setting member (19) controlling the adjustment device (9), via a signal line (35), towards increasing displacement volume of the pump (2) until each pressure compensator (15) which takes a through-flow setting of maximum opening size is set to a through-flow setting of smaller opening size, and controls the setting member (19) towards a reduction of the displacement volume of the pump (2) until one of the pressure compensators (15) which takes the through-flow setting of smaller opening size is set to the through-flow setting of maximum opening size.

2. A control device according to claim 1, characterised in that the measuring element (36) is formed with a limit switch.

3. A control device according to claim 1, characterised in that the measuring element (36) is formed with a position pickup.

## Revendications

1. Dispositif de commande pour une transmission hydrostatique comportant une pompe (2) dont le volume de refoulement est réglable au moyen d'un dispositif de réglage (9) et au moins deux utilisateurs raccordés à celle-ci, avec une vanne de commande (7) associée à chaque utilisateur pour commander le débit à fournir à l'utilisateur respectif et avec une balance manométrique (15) disposée en amont de chaque vanne de commande dans le sens de l'écoulement, pouvant être commandée dans le sens d'une position de passage d'écoulement par la pression d'utilisateur prélevée en aval de la vanne de commande, dans le sens de l'écoulement, comparée à la pression de la pompe prélevée en amont de la vanne de commande, dans le sens de l'écoulement,
**caractérisé** par un organe de mesure (36) associé à chaque balance manométrique (15), mesurant les différentes positions de passage d'écoulement de celle-ci, ledit organe étant raccordé par une ligne de transmission de signal (32, 33, 34) à un dispositif électronique de régulation (31) qui commande un organe de réglage (19) commandant le dispositif de réglage (9) à travers une ligne de transmission de signal (35) dans le sens d'une augmentation du volume de refoulement de la pompe (2) jusqu'à ce que chaque balance manométrique (15) occupant une position de passage d'écoulement d'ouverture maximale soit réglée sur une position de passage d'écoulement de moindre ouverture, et qui commande l'organe de réglage (19) dans le sens d'une diminution du volume de refoulement de la pompe (2) jusqu'à ce qu'une des balances manométriques (15) occupant la position de passage d'écoulement de moindre ouverture soit réglée sur la position de passage d'écoulement d'ouverture maximale.

2. Dispositif de commande selon la revendication 1, caractérisé en ce que l'organe de mesure (36) est constitué par un interrupteur de fin de course.

3. Dispositif de commande selon la revendication 1, caractérisé en ce que l'organe de mesure (36) est constitué par un capteur odométrique.
